# EUROPEAN PATENT SPECIFICATION

(11) **EP 0 812 560 B1**
(45) Date of publication and mention of the grant of the patent: **27.09.2000**
(21) Application number: 97850094.0
(22) Date of filing: 11.06.1997
(51) Int. Cl.: A47J 42/56, A47J 43/046

(54) **A food processor**
Küchengerät
Mixeur ménager

(30) Priority: 12.06.1996 SE 9602321
(43) Date of publication of application: 17.12.1997
(73) Proprietor: AB HÄLLDE MASKINER, S-164 22 Kista (SE)
(72) Inventor: Sundquist, Jarl, 191 41 Sollentuna (SE)
(74) Representative: Örtenblad, Bertil Tore

(56) References cited:
- EP-A- 0 571 348
- EP-A- 0 699 409
- WO-A-95/24852
- US-A- 4 111 372

## Description

The present invention relates to a food processor, and more specifically to a food processor of the mixer or blender type that include food cutting means. The invention is particularly concerned with a safety arrangement in such food processors.

Such food processors are of the type in which the foodstuff or foodstuffs to be prepared are in or are fed down into a container in the form of a basin or jug in which a cutting tool is placed on the bottom of the basin. Such machines also include a lid that is intended to be fitted to the basin when the machine is to be used.

Such machines are designed for use in so-called industrial kitchens and also for domestic use. A common feature of these machines is that the cutting tool at the bottom of the basin normally includes two knives that rotate at high speeds, typically at speeds of up to 15,000 r.p.m. The knives are sharp and consequently the machine must be constructed to prevent the fingers or the hand of the person operating the machine coming into contact with the knives when the machine is in use.

Such blenders will normally have a tall basin or jug that projects up from the stand and held against rotation at its lower end on the machine stand. The basin is intended to be fitted with a lid whilst in use. The knives at the bottom of the basin are connected to a coupling device beneath the basin by means of a connecting shaft. When the basin is fitted to the machine stand, the coupling device engages a further coupling device that is connected to the motor of the machine via a drive shaft.

It is necessary for the lid to be in place on the basin whilst the machine is being used, so as to prevent accidents that may occur by unintentionally inserting a hand down to the location of the knives when the lid is not fitted.

Examples of known processor of this type are US-A-4 111 372, EP-A-0 699 409 and WO-A-95 24852.

A known solution in this regard is one in which the lid coacts mechanically with a mechanical device in the form of a rod provided on the handle of the basin or jug, this rod functioning to actuate a switch in the machine when the basin and lid are in place. It is necessary to actuate the switch in this way in order to be able to start the machine.

One serious drawback with this solution is that the safety arrangement incorporated in the basin includes movable parts that may cause the safety arrangement to malfunction. For instance, the rod may fasten in its lower position as a result of foodstuff or dirt caked thereon.

Another known solution is one in which a vertical arm projects up from the machine, said arm being drawn up and in over the lid against a spring force, wherein the lower end of the arm actuates a machine-mounted switch that enables the machine to be started. The basin itself includes no actual safety means. However, this solution has another type of drawback, namely its instability as a result of the height of the machine and the basin together, coupled with the fact that the person operating the machine is required to pull the upper part of the arm upwards and in over the lid. This can cause the machine to topple over, and therewith constitutes a serious accident risk.

EP-A-0 571 348 discloses such an arrangement having all of the features of the first part of claim 1.

This instability is a general problem with all known blenders, due to the basin being position on a relatively tall machine.

The present invention provides a blender type food processor in which the basin and the lid are not included in the actual safety arrangement, while providing a machine whose centre of gravity is lower than that of known machines and therewith provide a more stable machine.

The present invention thus relates to a food processor of the kind that includes a machine stand, a basin or jug that receives the foodstuff or foodstuffs to be prepared, a basin lid, and one or more knives located at the bottom of the basin and driven by a drive shaft which projects up vertically through the bottom of the basin, and the machine stand includes a front low part which is adapted to support the basin in operation, and a rear upwardly projecting part that extends to approximately the same level as the upper level of the basin when the basin is fitted to the stand, and in that the machine motor is placed in the rear part of the stand, characterized in that a lid holder is provided at the upper portion of the rear part, wherein the lid holder can be swung about a horizontal axis between a raised first position and a lowered second position, in that the lid holder is adapted to coact with said lid such that the lid holder will be located in a predetermined position of rotation between said first and said second positions when the basin is carried by the machine stand and the lid is fitted to the basin, and in that the pivot shaft of the lid holder is adapted to coact with a switch in a manner such that the switch will only be actuated to enable the machine to be started when the lid holder is in a predetermined position of rotation.

The present invention will be described in more detail with reference to an exemplifying embodiment thereof and also with reference to the accompanying drawings, in which
- Figure 1a is a cut-away side view of an inventive food processor;
- Figure 1b is a view similar to Figure la but only shows the machine partially cut-away;
- Figures 2a-2d show the machine of Figure 1 with a lid holder in different positions; and
- Figure 3 is a perspective view of an inventive machine.

The food processor illustrated in Figures la and 1b includes a machine stand 1, a basin or jug 2 for receiving the foodstuff or foodstuffs to be prepared, and a basin lid 3. Mounted on the bottom of the basin 2 are knives 4 that are driven by means of a drive shaft 5 that projects vertically up through the bottom of the basin. The food processor shown in Figures la and 1b is of the blender or mixer kind.

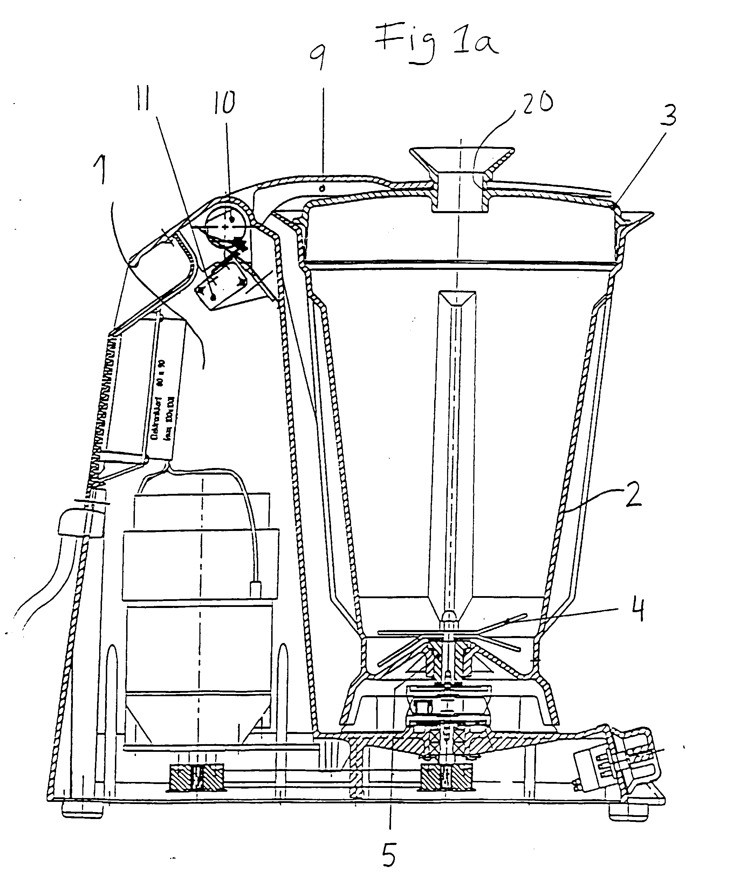

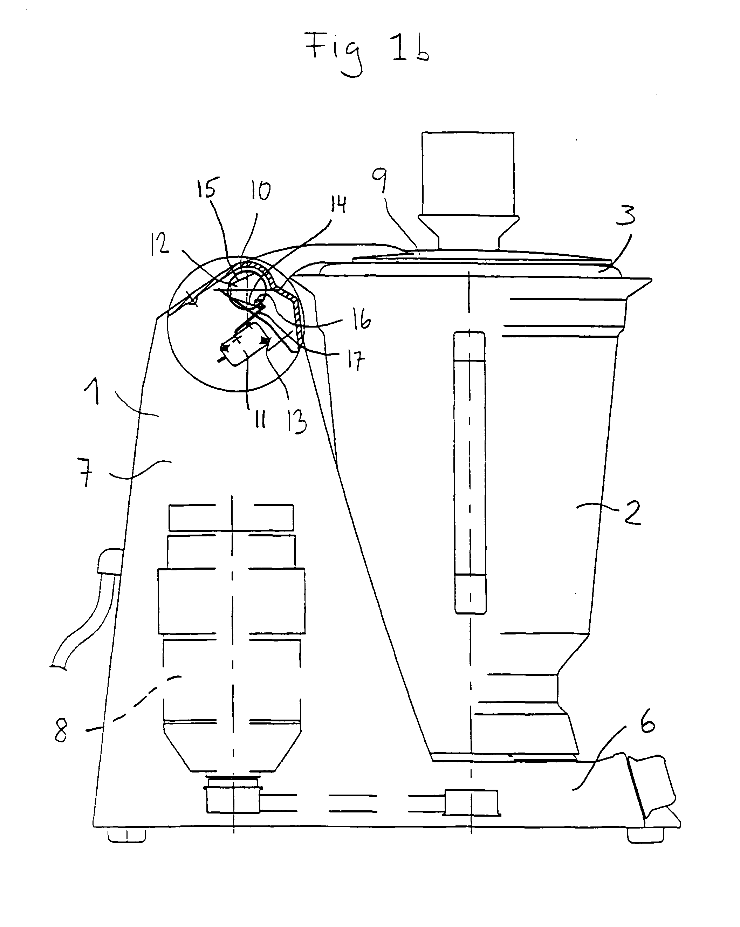

In accordance with the invention, the machine stand 1 includes a front low part 6, see Figure 1b, which is adapted to support the basin 2 in operation, and a rear upwardly projecting part 7. The rear upwardly projecting part 7 extends to approximately the same level as the upper level of the basin when the basin is placed on the machine stand. The drive motor 8 of the machine is placed in the rear part 7. This design has the important advantage of enabling the front low part 6 to be made very low, for instance given a height of only a pair of centimeters. Because the basin is placed on the low front part 6 while the motor 8 is placed in the lower portion of the rear part 7, the combined machine and basin will have a low centre of gravity in comparison with known machines with which the basin, or jug, is placed on a relatively tall machine stand that includes the motor.

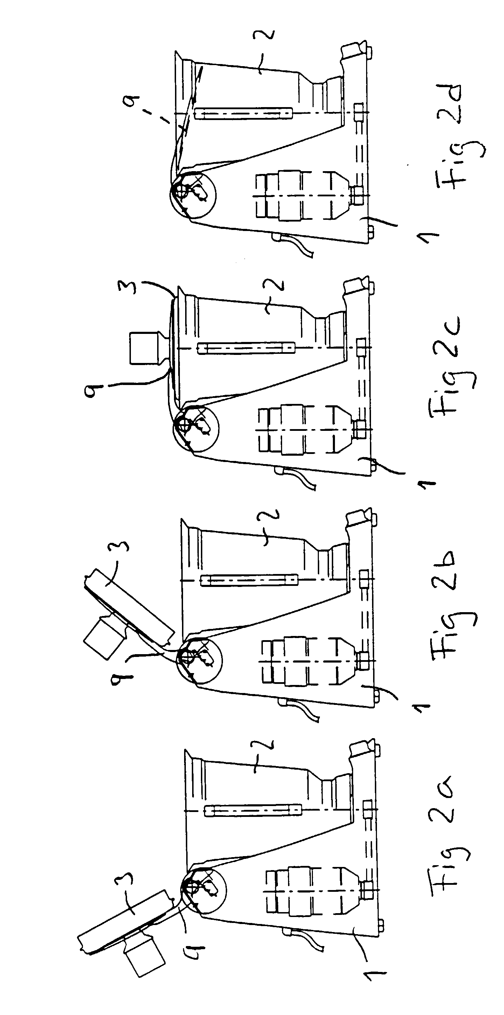

The inventive machine also includes a lid holder 9 at the upper portion of the rear part 7. The lid holder 9 can be swung about a horizontal shaft 10, between a raised first position, shown in Figure 2a, and a lowered second position shown in Figure 2d.

The lid holder 9 is adapted to coact with the lid 3 such that the lid holder will be located in a predetermined position of rotation (shown in Figure 2c) when the basin 2 is supported by the machine stand 1 and the lid 3 is supported by the lid holder, and when the lid holder is swung down so as to fit the lid on the basin 2. This predetermined position of rotation lies between said first and said second pivot positions.

The pivot shaft of the lid holder is adapted to coact with a switch 11 in a manner such that the switch will be actuated to enable the machine to be started only when the lid holder 9 is located in predetermined position of rotation. This means that the machine cannot be operated immediately the lid holder is located in a position of rotation other than said predetermined position (shown in Figure 2c). The machine will thus stop immediately the lid holder is lifted.

The switch is positioned in the machine stand.

It is of utmost importance that when the basin is placed on the machine without the lid being fitted on the basin, the lid holder when folded down will assume said second pivot position in which the lid holder has passed said predetermined position of rotation. This position is shown in Figure 2d. The machine cannot be started in this state, i.e. when the lid has not been placed on the basin.

According to one preferred embodiment of the invention, the pivot shaft 10 of the lid holder 9 includes a cam shaft 12 and a spring 13 that are adapted to coact with the lid holder and cause the lid holder to remain in said first or said second pivot positions respectively. Figure 1b shows two camming surfaces 14, 15 which coact with a leaf spring 13. The camming surface 14 coacts with the spring so as to drive the lid holder to its second, lowermost, pivot position, shown in Figure 2d, when the lid holder is swung down without the basin and the lid being in place on the machine. The camming surface 15 coacts with the spring to hold the lid holder in its first pivot position, shown in Figure 2a.

The shaft 10 includes a recess or notch 16 which is intended to coact with the outer end of an arm 17 belonging to said switch. When the outer end of the arm is located in the recess 16, the switch 11 is actuated so as to enable the machine to be operated. This position is reached only when the lid holder is located in said predetermined position of rotation, shown in Figure 2c.

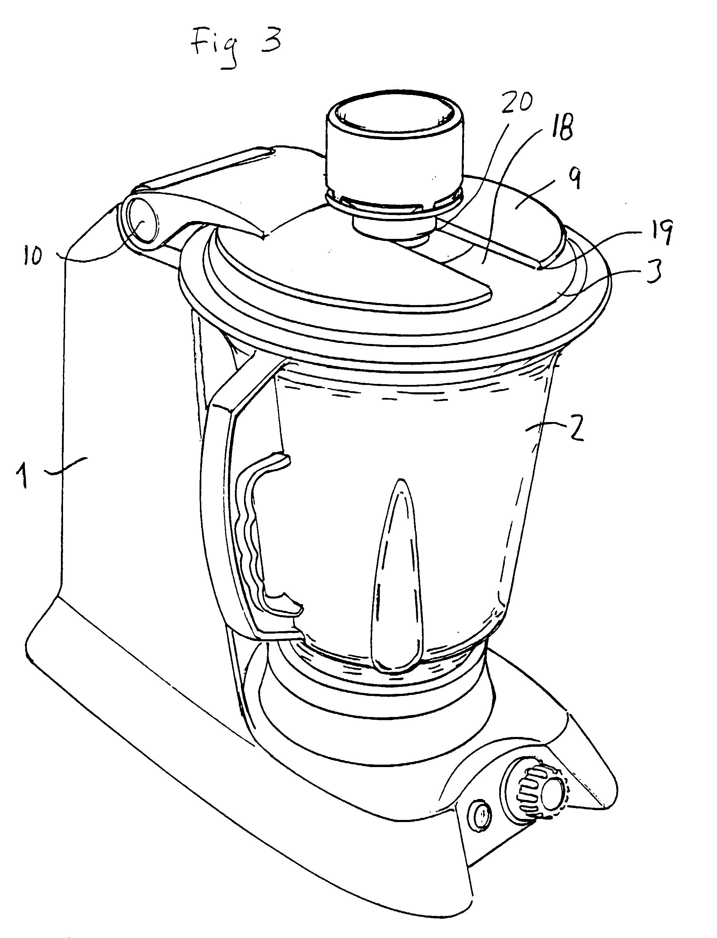

According to one preferred embodiment of the invention, that part of the lid holder 9 which coacts with and supports the lid 3 is disc-shaped and has a radial groove 18 that extends from the periphery 19 of the disc-shaped lid holder in towards the centre of said holder, see Figure 3. The groove 18 is intended to coact with a part 20 that projects up from the upper side of the lid. This enables the lid to be removed easily from the lid holder and replaced thereon. This embodiment of the lid holder also prevents a person placing his/her hand in the basin and in contact with the knives when the lid holder is positioned above the basin opening. Thus, if a person should hold the lid holder in its predetermined position of rotation without the lid holder supporting a lid, therewith enabling the machine to be started, the person concerned will be unable to insert his/her hand into the basin and be injured as a consequence thereof.

It will be evident that neither the lid nor the basin form a part of the actual safety arrangement and can therefore be handled and washed independently of such safety aspects.

It will also be evident that the machine and basin combination will form a unit that has a low centre of gravity.

The present invention thus eliminates the drawbacks mentioned in the introduction and associated with food processors of the present kind.

Naturally, the present invention can be modified with respect to different part-solutions without departing from the inventive concept.

The present invention shall not therefore be considered limited to the aforedescribed and illustrated exemplifying embodiments thereof, since modifications can be made within the scope of the following Claims.

## Claims

1. A food processor of the kind that includes a machine stand, a basin, or jug, for receiving the foodstuff or foodstuffs to be processed, a basin lid, and one or more knives located at the bottom of the basin and driven by a drive shaft that projects up vertically through the bottom of the basin, wherein the machine stand (1) includes a front low part (6) which is adapted to support the basin (2) in operation, and a rear upstanding part (7) that extends up to approximately the same level as the upper level of the basin (2) when said basin is placed on the machine stand; in that the motor (8) of the machine is placed in the lower portion of the rear part (7); **characterized** in that in that a lid holder (9) is mounted at the upper portion of the rear part (7) and can be swung about a horizontal pivot shaft (10) between a raised first pivot position (Figure 2a) and a lowered second pivot position (Figure 2d); in that the lid holder (9) is adapted to coact with the lid (3) such that the lid holder will be located in a predetermined position of rotation (Figure 2c) between said first and said second pivot position when the basin (2) is supported by the machine stand and the lid (3) is fitted to the basin; and in that the pivot shaft (10) of the lid holder (9) is adapted to coact with a switch (11) in a manner such that the switch will be actuated, so that the machine can be started, only when the lid holder (9) is located in said predetermined position of rotation.

2. An arrangement according to Claim 1, **characterized** in that the pivot shaft (10) of the lid holder (9) includes a cam shaft (12) and a spring (13) that are adapted to coact with the lid holder (9) in a manner such as to retain the lid holder in its first and its second pivot positions respectively.

3. An arrangement according to Claim 1 or 2, **characterized** in that the part of the lid holder (9) which is adapted to coact with and support the lid (3) is disc-shaped and has a radial groove (18) that extends from the periphery (19) of the disc-shaped part of the lid holder into the centre of the lid holder; and in that the groove (18) is intended to coact with a part (20) that projects up from the upper side of the lid (3).

## Patentansprüche

1. Küchenmaschine der Bauart, die einen Maschinenständer, eine Schüssel oder einen Krug zur Aufnahme des Lebensmittels oder der Lebensmittel, die verarbeitet werden sollen, einen Schüsseldeckel und ein oder mehrere Messer aufweist, die am Boden der Schüssel angeordnet sind und von einer Antriebswelle angetrieben werden, die vertikal durch den Boden der Schüssel nach oben ragt, wobei der Maschinenständer (1) einen vorderen niedrigen Teil (6) aufweist, der geeignet ist, um die Schüssel (2) im Betrieb zu tragen, und einen hinteren aufrechten Teil (7) aufweist, der sich nach oben erstreckt bis ungefähr zur gleichen Höhe wie die obere Höhe der Schüssel (2), wenn die Schüssel auf dem Maschinenständer plaziert ist, wobei der Motor (8) der Maschine im niedrigeren Abschnitt des hinteren Teils (7) angeordnet ist,
**dadurch gekennzeichnet**, daß ein Deckelhalter (9) am oberen Abschnitt des hinteren Teils (7) angeordnet ist und um eine horizontale Schwenkachse (10) zwischen einer erhöhten ersten Schwenkposition (Fig. 2a) und einer abgesenkten zweiten Schwenkposition (Fig. 2d) geschwenkt werden kann, daß der Deckelhalter (9) geeignet ist, mit dem Deckel (3) derart zusammenzuwirken, daß der Deckelhalter in einer vorbestimmten Drehstellung (Fig. 2c) zwischen der ersten und der zweiten Schwenkposition angeordnet ist, wenn die Schüssel (2) von dem Maschinenständer getragen wird und der Deckel (3) auf die Schüssel aufgesetzt ist, und daß die Schwenkachse (10) des Deckelhalters (9) geeignet ist, mit einem Schalter (11) in einer Weise zusammenzuarbeiten, daß der Schalter betätigt wird, so daß die Maschine nur dann eingeschaltet werden kann, wenn der Deckelhalter (9) sich in der vorbestimmten Drehposition befindet.

2. Anordnung gemäß Anspruch 1, **dadurch gekennzeichnet**, daß die Schwenkachse (10) des Deckelhalters (9) eine Nockenwelle (12) und eine Feder (13) aufweist, die so eingerichtet sind, daß sie mit dem Deckelhalter (9) in der Weise zusammenarbeiten, daß sie den Deckelhalter in seiner ersten und in seiner zweiten Schwenkposition halten.

3. Anordnung nach Anspruch 1 oder 2, **dadurch gekennzeichnet**, daß der Teil des Deckelhalters (9), der ausgebildet ist, um mit dem Deckel (3) zusammenzuwirken und den Deckel (3) zu tragen, scheibenförmig ausgebildet ist und eine radiale Rille (18) aufweist, die sich vom Umfang (19) des scheibenförmigen Teils des Deckelhalters zum Zentrum des Deckelhalters erstreckt und daß die Rille (18) dafür vorgesehen ist, um mit einem Teil (20) zusammenzuwirken, der von der unteren Seite des Deckels (3) nach oben vorragt.

## Revendications

1. Mixeur ménager du type comprenant un socle de machine, un bol ou pot destiné à recevoir le ou les produits alimentaires à mixer, un couvercle de bol et un ou plusieurs couteaux placés dans le fond du bol et entraînés par un arbre d'entraînement faisant saillie verticalement vers le haut à travers le fond du bol, dans lequel le socle de machine (1) comprend une partie basse avant (6) destinée à supporter le bol (2) en cours de fonctionnement et une partie arrière dressée verticalement (7) qui monte approximativement jusqu'au même niveau que le niveau supérieur du bol (2) lorsque ce bol est placé sur le socle de machine, le moteur (8) de la machine étant monté dans la partie inférieure de la partie arrière (7),
caractérisé en ce qu'
- un porte-couvercle (9) est monté à la partie supérieure de la partie arrière (7) et peut être basculé autour d'un axe de pivot horizontal (10) entre une première position de pivotement relevée (figure 2a) et une seconde position de pivotement abaissée (figure 2d),
- le porte-couvercle (9) est conçu pour coopérer avec le couvercle (3) de façon que ce porte-couvercle soit placé dans une position de rotation pédéterminée (figure 2c) entre la première position de pivotement et la seconde position de pivotement lorsque le bol (2) est supporté par le socle de machine et lorsque le couvercle (3) est adapté sur le bol, et
- l'axe de pivot (10) du porte-couvercle (9) est conçu pour coopérer avec un commutateur (11) de façon que ce commutateur soit actionné pour ne pouvoir faire démarrer la machine que lorsque le porte-couvercle (9) est placé dans la position de rotation prédéterminée.

2. Mixeur ménager selon la revendication 1,
caractérisé en ce que
l'axe de pivot (10) du porte-couvercle (9) comprend un arbre came (12) et un ressort (13) qui sont destinés à coopérer avec le porte-couvercle (9) de manière à retenir celui-ci respectivement dans sa première position de pivotement et dans sa seconde position de pivotement.

3. Mixeur ménager selon la revendication 1 ou 2,
caractérisé en ce que
- la partie du porte-couvercle (9), qui et destinée à coopérer avec le couvercle (3) et à supporter celui-ci, est une partie en forme de disque qui comporte une rainure radiale (18) partant de la périphérie (19) de la partie en forme de disque du porte-couvercle et allant jusqu'au centre de celui-ci, et
- la rainure (18) est destinée à coopérer avec une partie (20) faisant saillie vers le haut sur le côté supérieur du couvercle (3).
